(19) Europäisches Patentamt
European Patent Office
Office européen des brevets

(11) **EP 4 682 675 A1**

(12) **EUROPEAN PATENT APPLICATION**

(43) Date of publication:
**21.01.2026 Bulletin 2026/04**

(51) International Patent Classification (IPC):
**G06F 1/3206** (2019.01)     **G06F 1/324** (2019.01)
**G06F 1/3287** (2019.01)     **G06F 1/3296** (2019.01)

(21) Application number: **25187893.0**

(22) Date of filing: **07.07.2025**

(52) Cooperative Patent Classification (CPC):
**G06F 1/324; G06F 1/3206; G06F 1/3287;
G06F 1/3296**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.07.2024 US 202418773166**

(71) Applicant: **Microsoft Technology Licensing, LLC
Redmond, WA 98052 (US)**

(72) Inventors:
• **CHAN, Ka Long
Redmond, 98052 (US)**
• **BROWN, Tristan Anthony
Redmond, 98052 (US)**

(74) Representative: **CMS Cameron McKenna Nabarro
Olswang LLP
Cannon Place
78 Cannon Street
London EC4N 6AF (GB)**

(54) **PROCESSOR IDLE STATE SELECTION IN A VIRTUALIZED ENVIRONMENT**

(57) A method implemented in a computer system with a processor system, including a logical processor, includes configuring an idle state calculation loop with a first idle residency calculation type, generating a projected processor idle residency, determining a target processor idle state based on the projected residency, instructing the logical processor to enter an idle period using the target state, identifying the actual processor idle residency post-idle period, and comparing it to the projected residency. Based on this comparison, the method configures the idle state calculation loop with a second idle residency calculation type. This method optimizes processor idle states by dynamically adjusting the calculation type to improve power efficiency and performance in the computer system.

600

*FIG. 6*

Description

TECHNICAL FIELD

The present disclosure relates to systems, methods, and devices that enable a hypervisor to select processor idle states.

BACKGROUND

Modern central processing units (CPUs), or processors, support a variety of power management technologies that can be used to balance performance, power consumption, and heat generation, among other things. For example, modern processors support a variety of processor idle states, which reduce processor power consumption and heat generation when the processor is idle (e.g., not actively executing instructions). For instance, the Advanced Configuration and Power Interface (ACPI) specification defines a variety of processor idle states, known as "C-states" (sometimes referred to as "C-modes"), as well as interfaces that an operating system (OS) can use to instruct a processor to enter various C-states. C-states are states when the processor has reduced or turned off selected functions. Different processors support different numbers of C-states in which various processor components are turned off. Generally, a higher-numbered C-state is a "deeper" idle state that turns off more parts of the processor, while a lower-numbered C-state is a "lighter" idle state that turns off fewer parts of the processor. Deeper idle states can significantly reduce power consumption by the processor, as compared to lighter idle states. However, because a deeper idle state turns off more of the processor than a lighter idle state, there is an increased latency cost, known as exit latency, for returning from a deeper idle state compared to a lighter idle state.

While the C-states implemented by a given processor may vary, some basic C-states defined by the ACPI specification, and supported by most contemporary processors, are outlined in **Table 1**:

**Table 1**

| State | Known As | Description |
|---|---|---|
| C0 | Operating State | The CPU is fully turned on |
| C1 | Halt | The CPU processor is not executing instructions, but it can return to an executing state essentially instantaneously. This state stops CPU main internal clocks via software while a bus interface unit and an advanced programmable interrupt controller (APIC) are kept running at full speed |
| C2 | Stop-Clock | The CPU maintains all software-visible state but may take longer to wake up. This state stops CPU main internal clocks via software and reduces CPU voltage while the bus interface unit and APIC are kept running at full speed |
| C3 | Sleep | The CPU does not need to keep its cache coherent but maintains other state. Some CPUs have variations on the C3 state (Deep Sleep, Deeper Sleep, etc.) that differ in how long it takes to wake the processor. This state stops all CPU internal clocks. |

Some processor manufacturers define additional C-states, which may vary by processor model. For example, contemporary processors from INTEL CORPORATION have C-states up to C10, where the processor distinguishes core states (e.g., states of individual CPU cores) and package states (e.g., groupings of CPU cores within the same processor package).

When an OS instructs a processor to enter an idle state, the OS instructs the processor of the idle state for the processor to enter. Generally, an OS aims to choose an idle state that will align with the processor's future idle residency, which is how long the processor stays in an idle state after it has been instructed to enter the idle state. For example, if the processor is anticipated to be relatively busy, the OS may choose a lighter idle state (e.g., lower idle residency) than if the processor is anticipated to be relatively idle (e.g., higher idle residency). Choosing an idle state that closely aligns with the processor's actual idle residency promotes energy efficiency and avoids performance and energy loss due to high exit latency.

Additionally, hypervisor-based virtualization technologies allocate portions of a computer system's physical resources (e.g., processor resources, physical memory resources, storage resources) into separate partitions and execute software within each partition. Therefore, hypervisor-based virtualization technologies facilitate the creation of guest virtual machines (VMs) that each execute guest software, such as an OS and applications executing therein. A computer system that hosts guest VMs is commonly called a VM host or a VM host node. While hypervisor-based virtualization technologies can take various forms, many use an architecture comprising a type-one, or bare-metal, hypervisor that has direct "bare-metal" access to hardware and operates in a separate execution environment from all other software in the computer system. A type-one hypervisor creates a root (or host) partition (e.g., a host VM) and one or more child (or guest) partitions (e.g., guest VMs). Each partition comprises an isolated slice of the underlying hardware of the VM host, such as memory and processor resources. The root partition executes a host OS and a host virtualization stack that manages the child partitions. Thus, the hypervisor grants the root partition a greater level of access to the hypervisor and to hardware resources than it does to child partitions. Other hypervisor-based architectures comprise a type-two, or hosted, hypervisor that executes within the context of an underlying OS and creates one or more child partitions.

Taking HYPER-V from MICROSOFT CORPORATION as one example, the HYPER-V hypervisor is a type-one hypervisor making up the lowest layer of a HYPER-V stack. The HYPER-V hypervisor provides basic functionality for dispatching and executing virtual processors for guest VMs. The HYPER-V hypervisor takes ownership of hardware virtualization capabilities (e.g., second-level address translation processor extensions such as rapid virtualization indexing from ADVANCED MICRO DEVICES or extended page tables from INTEL; an input/output (I/O) memory management unit that connects a direct memory access-capable I/O bus to main memory; processor virtualization controls). The HYPER-V hypervisor also provides a set of interfaces to allow a HYPER-V host stack within a root partition to leverage these virtualization capabilities to manage guest VMs. The HYPER-V host stack provides general functionality for guest VM virtualization (e.g., memory management, guest VM lifecycle management, device virtualization).

The subject matter claimed herein is not limited to embodiments that solve any disadvantages or that operate only in environments such as those described *supra.* Instead, this background is only provided to illustrate one example technology area where some embodiments described herein may be practiced.

### SUMMARY

In some aspects, the techniques described herein relate to methods, systems, and computer program products, including: configuring an idle state calculation loop to use a first idle residency calculation type; generating a projected processor idle residency using the first idle residency calculation type; determining a target processor idle state based on the projected processor idle residency; instructing a logical processor to enter an idle period using the target processor idle state; identifying an actual processor idle residency for the idle period after the logical processor returns from the idle period; determining whether the actual processor idle residency was less than the projected processor idle residency; and configuring the idle state calculation loop to use a second idle residency calculation type based on determining that the actual processor idle residency was less than the projected processor idle residency.

In some aspects, the techniques described herein relate to methods, systems, and computer program products, including: configuring an idle state calculation loop to use a first idle residency calculation type; generating a projected processor idle residency using an SMA of prior processor idle residency; determining a target processor idle state based on the projected processor idle residency; instructing a logical processor to enter an idle period using the target processor idle state; identifying an actual processor idle residency for the idle period after the logical processor returns from the idle period; determining that the actual processor idle residency was less than the projected processor idle residency; and configuring the idle state calculation loop to use an EMA of prior processor idle residency based on determining that the actual processor idle residency was less than the projected processor idle residency.

In some aspects, the techniques described herein relate to methods, systems, and computer program products, including: configuring an idle state calculation loop to use a first idle residency calculation type; generating a projected processor idle residency using an SMA of prior processor idle residency; determining a target processor idle state based on the projected processor idle residency; instructing a logical processor to enter an idle period using the target processor idle state; identifying an actual processor idle residency for the idle period after the logical processor returns from the idle period; determining that the actual processor idle residency was less than the projected processor idle residency; configuring the idle state calculation loop to use an EMA of prior processor idle residency based on determining that the actual processor idle residency was less than the projected processor idle residency; and after a threshold period has elapsed, resetting the idle state calculation loop, including configuring the idle state calculation loop to use the first idle residency calculation type.

This Summary introduces a selection of concepts in a simplified form that are further described below in the Detailed Description. This Summary is not intended to identify key features or essential features of the claimed subject matter, nor is it intended to be used to determine the scope of the claimed subject matter.

### BRIEF DESCRIPTION OF THE DRAWINGS

To describe how the advantages of the systems and methods described herein can be obtained, a more particular description of the embodiments briefly described *supra* is rendered by reference to specific embodiments thereof, which are illustrated in the appended drawings. These drawings depict only typical embodiments of the systems and methods described herein and are not, therefore, to be considered to be limiting in their scope. Systems and methods are described and explained with additional specificity and detail through the use of the accompanying drawings, in which:

Figure 1 illustrates an example of a computer architecture that facilitates the selection of processor idle states by projecting idle residency during runtime in a virtual machine (VM) host;

Figure 2 illustrates an example of a hypervisor idle state manager;

Figure 3 illustrates a flow diagram showing the operation of a feedback loop performed by the idle state manager of Figure 2;

Figure 4 illustrates an example diagram showing recommended idle states based on minimum residencies;

Figure 5 illustrates an example diagram showing the repeated application of a feedback loop by the idle state manager of Figure 2 to manage idle states over time; and

Figure 6 illustrates a flow chart of an example of a method for selecting a processor idle state by projecting idle residency during runtime in a VM host.

## DETAILED DESCRIPTION

Projecting a future central processing unit (CPU), or processor, workload is important to making a good idle state selection. Some processors include hardware-based auto-demotion capabilities, in which the processor itself detects a wake-up frequency and automatically demotes idle states without the need for software intervention. However, for general-purpose operating systems (OSs) running on processors without such hardware features, the OS must have a way to determine an anticipated workload and idle state. For example, in bare metal environments, a native OS kernel can detect interrupt frequencies, project the next wake-up time, and determine a projected idle residency from the projected next wake-up time.

While a bare metal OS inherently has visibility into a processor's current and upcoming workloads because it is scheduling those workloads, a hypervisor lacks such visibility because workloads are encapsulated by guest virtual machines (VMs) and are thus opaque to the hypervisor. This results in significant challenges to accurately projecting a processor's next wake-up time and selecting a proper processor idle state in virtualized environments. Some idle state management solutions require the hypervisor to intercept interrupts directed to a guest VM, which can be complex and computationally expensive (e.g., based on context switches between the guest VM and the hypervisor). Furthermore, hypervisors with posted interrupt capabilities, in which an interrupt is directly posted to a data structure associated with a target VM, allow the hardware to bypass the hypervisor and send interrupts directly to the guest VMs, making it impossible for the hypervisor to gather enough information to perform calculations similar to those in a bare metal environment.

At least some embodiments described herein are directed to methods and systems that improve a hypervisor's ability to select processor idle states by projecting idle residency during runtime. These embodiments project processor idle residency based on a multi-stage statistical method, allowing for energy savings while considering the negative effects (e.g., energy and performance) of selecting a deeper idle state. Notably, these embodiments operate without interrupt interception in a virtualized environment or relying on hardware-based auto-demotion. Additionally, because methods and systems are performed by the hypervisor, they are operable regardless of hardware (processor) support for auto-demotion.

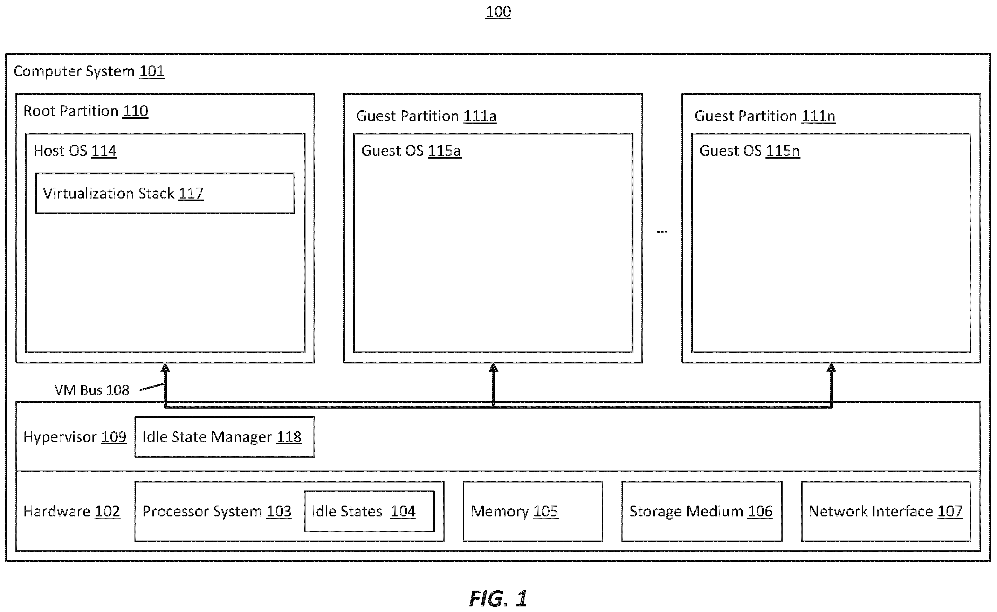

Figure 1 illustrates an example of a computer architecture 100 that facilitates the selection of processor idle states by projecting idle residency during runtime in a VM host. Referring to Figure 1, computer architecture 100 includes a computer system 101 comprising hardware 102. Examples of hardware 102 include a processor system 103 (e.g., a single processor or a plurality of processors), a memory 105 (e.g., system or main memory), a storage medium 106 (e.g., a single computer-readable storage medium, or a plurality of computer-readable storage media), and a network interface 107 (e.g., one or more network interface cards) for interconnecting to one or more other computer systems.

In computer architecture 100, a hypervisor 109 executes directly on hardware 102. In general, the hypervisor 109 partitions hardware resources (e.g., processor system 103, memory 105, I/O resources) among a root partition 110, within which a host OS 114 executes, as well as one or more guest partitions 111, or guest VMs, (e.g., guest partition 111a to guest partition111n). These partitions host corresponding guest OSs 115 (e.g., guest OS 115a in guest partition 111a to guest OS 115n in guest partition 111n). The hypervisor 109 also enables regulated communications between partitions via a VM bus 108. The host OS 114 includes a virtualization stack 117, which manages guest VMs (e.g., memory management, VM guest lifecycle management, device virtualization) via one or more application program interface (API) calls to the hypervisor 109 via VM bus 108.

In a bare-metal single-OS scenario, an OS would execute directly on hardware 102, and that OS's kernel could use knowledge of the workloads executing thereon to inform its idle state determinations. However, in computer system 101, hypervisor 109 executes directly on hardware 102 and instructs the processor system 103 to enter idles states. Thus, in Figure 1, hypervisor 109 includes an idle state manager 118, which dynamically manages idle states 104 of the processor system 103. However, hypervisor 109 lacks knowledge of the workloads executing on the guest VMs (e.g., guest partition 111a to guest partition 111n). Conventionally, a hypervisor would determine an idle state based on identifying a processor's utilization over a single immediate prior time period (50 milliseconds), projecting this same utilization will occur over the next time period, and choosing an idle state accordingly. This approach can be fairly effective when a processor is relatively busy or relatively idle but can lead to poor choices in other situations. For example, a fifty percent processor utilization can occur due to a single burst of activity over half the time window or due to many smaller bursts of activity spread over the time window. In the former situation, deeper idle states may be beneficial, and in the latter situation, lighter idle states may be beneficial. However, this utilization-based approach cannot distinguish between the two, and thus it may lead to poor idle state determinations.

In embodiments, the idle state manager 118 improves on idle state determination approaches using a novel processor idle residency projection approach that utilizes a combination of a simple moving average (SMA) idle residency calculation and an exponential moving average (EMA) idle residency calculation in a feedback loop to project the minimum time a processor is likely to remain in an idle state. Unlike prior techniques, which considered overall utilization over a single previous time period, both SMA and EMA consider a processor's actual idle residency over multiple previous idle periods. The primary difference between the two is how they treat multiple previous idle periods. An SMA treats all prior idle periods equally (e.g., it's a simple average), and it has been observed to generally lead to projections of deeper idle states compared to an EMA. An EMA, on the other hand, gives more weight to the most recent idle periods, and it has been observed to generally lead to projections of lighter idle states compared to an SMA. The use of a feedback loop that leverages both an SMA and an EMA makes idle state manager 118 reactive to incorrect projections, which improves the accuracy of idle state determinations when compared to prior approaches. For example, testing has shown that, depending on the workload, a 101% to 942% improvement in data throughput for VM workloads can be achieved when using a combination of SMA and an EMA to make idle state projections using idle residency, as compared to using conventional hypervisor-based idle state projection techniques that rely on overall processor utilization over an immediately prior time period.

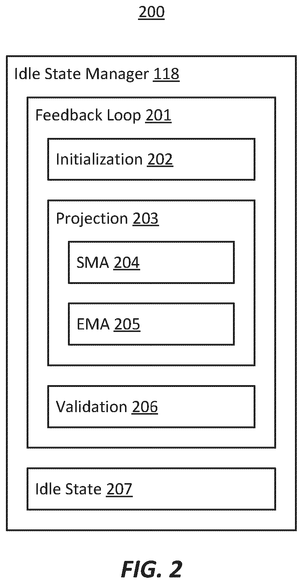

Figure 2 illustrates an example 200 of the idle state manager 118 of Figure 1. Each component of the idle state manager 118 depicted in Figure 2 represents various functionalities that the idle state manager 118 may implement under the embodiments described herein. These components-including their identity and arrangement-are presented merely as an aid in describing example embodiments of the idle state manager 118.

As shown, the idle state manager 118 generally operates by starting a new idle evaluation period and re-executing a feedback loop 201 at a regular interval (e.g., every n-ms, such as every 25ms, every 50ms, or every 100ms in some examples). In some embodiments, the idle state manager 118 runs a distinct instance of the feedback loop 201 for each logical processor (e.g., CPU core) of the processor system 103. As shown, the feedback loop 201 includes initialization (initialization component 202), projection (projection component 203), and validation (validation component 206).

In general, feedback loop 201 starts with an optimistic and inclusive approach, using an SMA calculation 204 to project idle residency and opportunistically save energy by entering deeper idle states. If the SMA calculation 204 proves overly optimistic or untrustworthy, the feedback loop 201 switches to a more restrictive approach using an EMA calculation 205 to ensure system performance and energy savings. Thus, the idle state manager 118 balances the inclusive and restrictive approaches by using SMA and EMA in different scenarios, trying to maximize power savings while considering the risk of potential performance and energy loss.

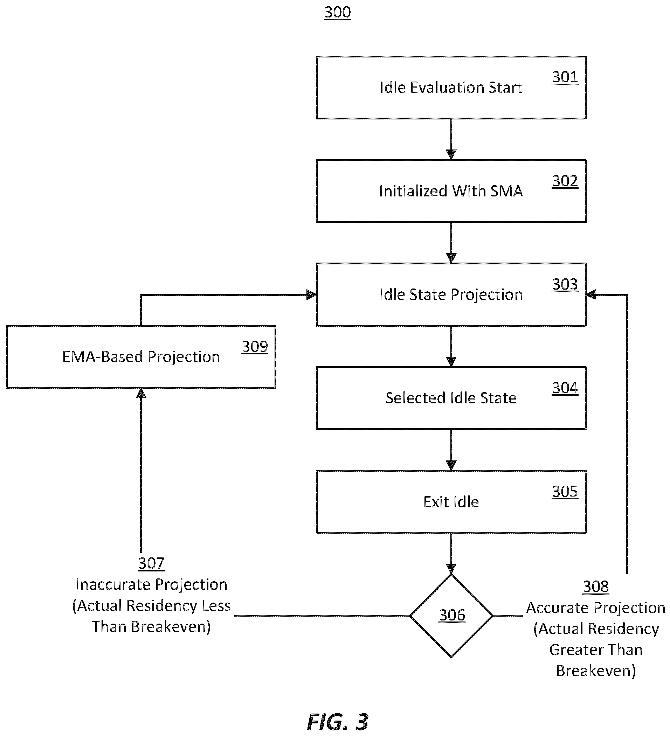

Feedback loop 201 is now described in connection with Figure 3, illustrating a flow diagram 300 of the operation of feedback loop 201. In embodiments, when feedback loop 201 begins (e.g., step 301, "idle evaluation start" in flow diagram 300), initialization component 202 initializes a processor's (e.g., logical processor, such as CPU core) idle residency projection based on an SMA (e.g., step 302, "initialized with SMA" in flow diagram 300). During the first projection in the feedback loop, projection component 203 will project the next idle residency for that logical processor using the SMA calculation 204 (e.g., step 303, "idle state projection" in flow diagram 300). In embodiments, a SMA calculation 204 is the average of the last $N$ idle residencies for that processor. For example, if $N$ is three, and the idle residencies for the prior three idle periods were 12ms, 16ms, and 14ms, an SMA calculation 204 would project the idle residency for the next idle period to be about 14ms. This average is calculated by adding the three prior idle residencies and dividing that sum by the number of idle periods, as shown below:

$$\frac{12 + 16 + 14}{3}$$

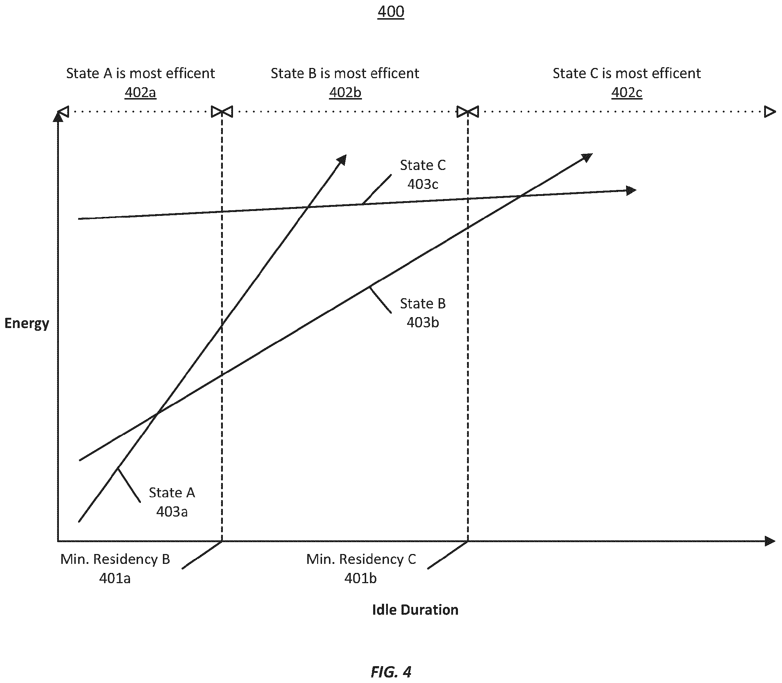

Using the projected idle residency, an idle state component 207 chooses an appropriate idle state for the processor to use for the next idle period. For example, Figure 4 illustrates an example diagram 400 showing recommended idle states based on minimum idle residencies. In embodiments, recommended idle states, such as those shown in diagram 400, are provided by a processor manufacturer. The idle state component 207 uses such recommendations to determine which idle state to choose based on the projected idle residency. For example, in diagram 400, there are three possible idle states, state A (403a), state B (403b), and state C (403c), plotted against idle duration (x-axis) and energy use (y-axis). As shown, different idle states are most efficient for different minimum idle residencies. For instance, for a region 402a corresponding a residency period that is less than a minimum residency associated state B (point 401a), entering state A is most efficient; for a region 402b corresponding a residency period that is equal to the minimum residency associated state B (point 401a) and a minimum residency associated state C (point 401b), entering state B is most efficient; and for any greater residency periods (region 402c), entering state C is most efficient.

After selecting an idle state, an idle state component 207 instructs the processor to enter that idle state (e.g., step 304, "selected idle state" in flow diagram 300). After the idle period is over and the processor returns from the idle state (e.g., step 305, "exit idle" in flow diagram 300), the validation component 206 uses the actual idle residency for that idle period (e.g., as reported by processor system 103, using the advanced configuration and power interface (ACPI)) to determine if the projection was accurate or if there was an incorrect projection (e.g., step 306 in flow diagram 300). In embodiments, a projection is determined to be accurate if the actual idle residency is greater than the projected idle residency (e.g., greater than breakeven), and an incorrect projection is identified if the actual idle residency is less than the projected idle residency (e.g., less than breakeven). When the actual idle residency equals the projected idle residency, some embodiments determine that the projection was accurate; however, other embodiments could consider this an incorrect projection.

If the projection is accurate (e.g., branch 308, flow diagram 300), projection component 203 updates the SMA calculation 204 using the latest measured idle residency (e.g., step 303), and the feedback loop continues. If there are no incorrect projections, feedback loop 201 may continue to use the SMA calculation 204 for a plurality of cycles. However, if there was an incorrect projection (e.g., branch 307, flow diagram 300), projection component 203 switches to the use of the EMA calculation 205 for the idle residency projection (e.g., step 309, "EMA-based projection" in flow diagram 300). In embodiments, the EMA calculation 205 is performed as shown in **Equation 1:**

$$[\text{EMA}_{new} = (1 - \alpha) \cdot \text{EMA}_{old} + \alpha \cdot \text{New CPU Idle Time}]$$

**Equation 1**

In **Equation 1**, $\alpha$ is a weighting that adjusts how heavily the most recent data is relied upon compared to less recent data. In some implementations, $\alpha = 0.5$, such that both the historical average ($\text{EMA}_{old}$) and the recent data (*New CPU Idle Time*) are both weighed by 50%. This enables the idle state manager 118 to promptly identify shifts in trends while still considering the historical data to a significant extent. In these implementations, where $\alpha = 0.5$, the EMA calculation 205 can be simplified as shown in Equation 2:

$$\left[ \text{EMA}_{new} = \frac{EMA_{old} + New\ CPU\ \text{Idle Time}}{2} \right]$$

**Equation 2**

As mentioned, in embodiments, the idle state manager 118 generally operates based on re-executing feedback loop 201 at a regular interval (e.g., every n ms, every n idle periods, after a threshold number of incorrect projections). This means that when the feedback loop 201 re-starts, the initialization component 202 re-initializes the feedback loop 201 to utilize the SMA calculation 204. Thus, even when the EMA calculation 205 is used for a given processor in response to an incorrect projection, the feedback loop 201 will occasionally switch back to using the SMA calculation 204 for that processor, which may reopen the opportunities for deeper idle state selection if they were previously gated due to an incorrect projection.

In embodiments, parameters of SMA calculation 204 and EMA calculation 205 are adjustable during a single instance of the idle state manager 118 and/or across different instances of the idle state manager 118. For example, these parameters may be adjusted dynamically (e.g., as a result of a dynamic evaluation of the performance of feedback loop 201, e.g., by idle state manager 118 or host OS 114), based on a user-specified preference, based on workloads that computer system 101 may be hosting (e.g., the number of VMs hosted on computer system 101; the type(s) of VMs hosted on computer system 101; the workloads be executed at the VMs, if that information is available), and the like.

In embodiments, for SMA calculation 204, N is adjustable, thereby altering the number of previously idle states considered in the average. In embodiments, for EMA calculation 205, $\alpha$ is adjustable, thereby altering how much the EMA historical average ($EMA_{old}$) is weighted against more recent data (*New CPU Idle Time*). Some embodiments may even introduce separate weighting factors for $EMA_{old}$ and the *New CPU Idle Time* rather than using the same weighting factors. For example, in Equation 3:

$$[EMA_{new} = (1 - \alpha) \cdot EMA_{old} + \beta \cdot \text{New CPU Idle Time}]$$

**Equation 3**

In **Equation 3,** $\alpha$ is a weight applied to that ($EMA_{old}$) and $\beta$ is a weighting applied to *New CPU Idle Time.*

Notably, aggressively selecting only deep idle states provides limited energy benefits. In the worst case, a system could bounce between low and high idle residency, causing any projection to be incorrect. In the best case, an incorrect projection is a one-off false positive. However, the best case is not always the norm, so selecting deeper idle states when the system wakes up frequently is unstable, and risks losing both performance and energy in each idle transition. Therefore, using feedback loop 201, idle state manager 118 takes the tradeoff of losing opportunities to save more power to avoid potential energy inefficiency. Since idle state manager 118 resets the projection to SMA every idle evaluation period (e.g., when feedback loop 201 is restarted), this tradeoff only lasts for a short time in exchange for a more reliable selection temporarily. Using SMA and EMA projections, the idle state manager 118 balances inclusive and restrictive idle state selection.

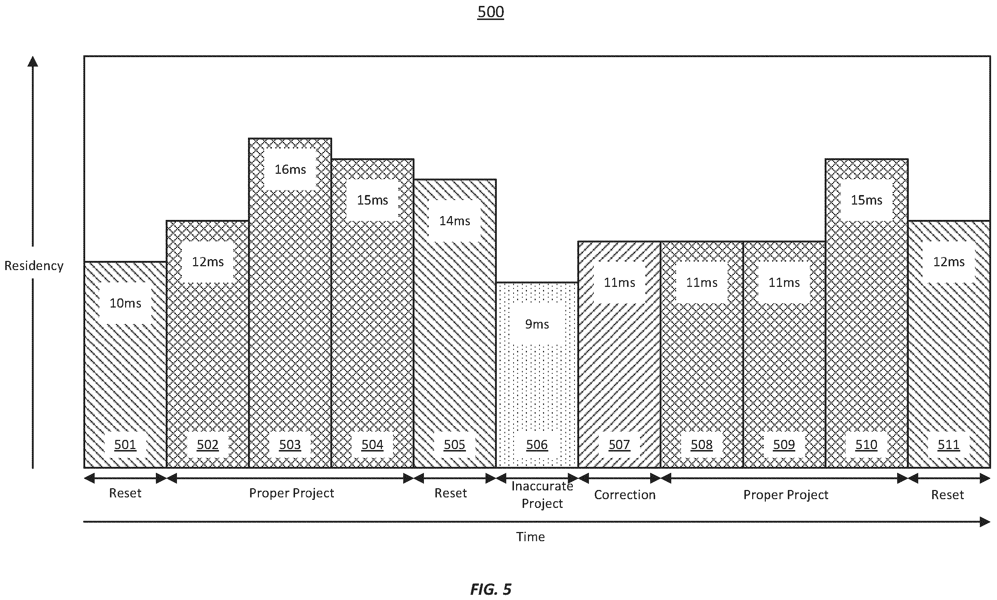

Figure 5 illustrates an example diagram 500 showing the repeated application of feedback loop 201 by the idle state manager 118 to manage idle states over time. In diagram 500, bars with a left-leaning diagonal shading (e.g., bars 501, 505, 511) represent measurement periods in which feedback loop 201 has restarted (e.g., step 301, flow diagram 300), thus resetting the idle residency calculation to use SMA calculation 204 with N=3 (e.g., step 302, flow diagram 300). In diagram 500, bars with a cross-hatched shading (bars 502, 503, 504, 508, 509, and 510) represent idle periods where feedback loop 201 has correctly projected the idle residency. In diagram 500, bar 506 with dot-based shading represents an idle period where an incorrect projection happened using the SMA calculation 204 (e.g., branch 307, flow diagram 300), triggering projections using EMA calculation 205 until feedback loop 201 restarts again.

In diagram 500, feedback loop 201 resets to SMA calculation 204, and at bar 501, the SMA calculation 204 estimates at least 10ms of idle residency for the next idle period. As feedback loop 201 continues for bars 502, 503, and 504, the SMA calculation 204 makes proper projections. Feedback loop 201 restarts again at bar 505 (e.g., due to the passage of a certain amount of time), and SMA calculation 204 projects at least 14ms of idle residency for the next idle period. This time, this is an incorrect projection because, at bar 506, the next idle period was only 9ms, less than the 14ms that was projected. This incorrect projection triggers ongoing projections using EMA calculation 205 (e.g., step 309, flow diagram 300) until feedback loop 201 restarts again. Using EMA calculation 205, the next idle period is projected to be 11ms (bar 507). EMA calculation 205 continues to make proper projections into the next reset of feedback loop 201, where SMA calculation 204 is used again.

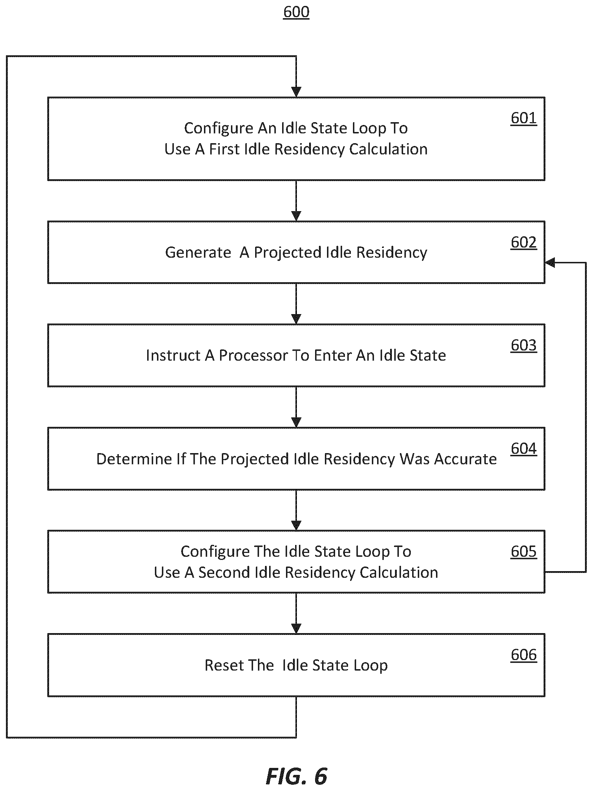

Embodiments are now described in connection with Figure 6, which illustrates a flow chart of an example method 600 for selecting a processor idle state by projecting idle residency during runtime in a VM host. In embodiments, instructions for implementing method 600 are encoded as computer-executable instructions (e.g., idle state manager 118) stored on a computer storage medium (e.g., storage medium 106) that are executable by a processor (e.g., processor system 103) to cause a computer system (e.g., computer system 101) to perform method 600.

The following discussion now refers to a method and method acts. Although the method acts are discussed in specific orders or are illustrated in a flow chart as occurring in a particular order, no order is required unless expressly stated or required because an act is dependent on another act being completed before the act being performed.

Method 600 generally corresponds to the operation of the feedback loop 201. As discussed, in embodiments, a different instance of the feedback loop 201 operates for each logical processor (e.g., processing unit, processor core) of the processor system 103. Thus, in some embodiments, a processor system comprises a plurality of logical processors, and method 600 comprises operating a different idle state calculation loop for each logical processor.

Referring to Figure 6 and focusing on the operation of a single instance of the feedback loop 201 and a single logical processor, in embodiments, method 600 comprises act 601, configuring an idle state loop to use a first idle residency calculation. In some embodiments, act 601 comprises configuring an idle state calculation loop to use a first idle residency calculation type. For example, upon starting feedback loop 201, the initialization component 202 initializes feedback loop 201 with a first idle residency calculation type. As shown in step 302 of flow diagram 300, this first idle residency calculation type may be an SMA calculation 204. Thus, in some embodiments, the first idle residency calculation type is an SMA of prior processor idle residency for the logical processor. In embodiments, the SMA is calculated by averaging actual idle residency over N prior idle periods, where N is a positive integer.

Method 600 also comprises act 602, generating a projected idle residency. In some embodiments, act 602 comprises generating a projected processor idle residency using the first idle residency calculation type. For example, the projection component 203 generates an idle residency using SMA calculation 204.

Method 600 also comprises act 603, instructing a processor to enter an idle state. In some embodiments, act 603 comprises determining a target processor idle state based on the projected processor idle residency and instructing the logical processor to enter an idle period using the target processor idle state. For example, the idle state component 207 chooses an idle state appropriate for the projected processor idle residency (see, e.g., the example of Figure 4) and instructs the logical processor to enter that idle state.

Method 600 also comprises act 604, determining if the projected idle residency was accurate. In some embodiments, act 604 comprises identifying an actual processor idle residency for the idle period after the logical processor returns from the idle period and determining whether the actual processor idle residency was greater than or less than the projected processor idle residency. For example, after the logical processor returns from the idle state, the validation component 206 determines if the projected processor idle residency was accurate for that idle period (e.g., greater than or equal to the actual processor idle residency for the idle period) or inaccurate (e.g., less than the actual processor idle residency for the idle period).

Method 600 also comprises act 605, configuring the idle state loop to use a second idle residency calculation. In some embodiments, act 605 comprises configuring the idle state calculation loop to use a second idle residency calculation type based on determining whether the actual processor idle residency was greater than or less than the projected processor idle residency. For example, the validation component 206 adjusts the idle residency calculation based on the validation outcome in act 604. It uses that adjusted idle residency calculation for at least one future projection (e.g., as indicated by an arrow extending from act 606 to act 602). In some embodiments, the idle state calculation loop uses the second idle residency calculation type until the idle state calculation loop is reset. That is, the idle state calculation loop only reverts to the first idle residency calculation type when the idle state calculation loop is reset (e.g., act 606).

In some instances, in act 604, the actual processor idle residency is determined to be equal to or greater than the projected processor idle residency, e.g., an accurate projection. In these embodiments, validation component 206 may stick with SMA, such that in act 605, the second idle residency calculation type is the SMA. Notably, in some embodiments, validation component 206 may tweak the calculation parameters, even if the same calculation type is retained. For example, for SMA, the validation component 206 may use a different number for N for the second idle residency calculation type than it did for the first idle residency calculation type.

In other instances, in act 604, the actual processor idle residency is determined to be less than the projected processor idle residency, e.g., an incorrect projection. In these embodiments, the validation component 206 may switch to EMA, such that in act 605, the second idle residency calculation type is the EMA. As described in connection with **Equation 1** and **Equation 2,** an EMA can be calculated as $(1 - \alpha) * X + \alpha * Y$, where X is a prior EMA calculation, Y is the actual processor idle residency, and $\alpha$ is a weighting factor. In some embodiments, the validation component 206 may adjust the parameters of the EMA calculation, such as by adjusting the weighting factor.

Method 600 also comprises act 606, resetting the idle state loop. In some embodiments, act 606 comprises resetting the idle state calculation loop, including configuring the idle state calculation loop to use the first idle residency calculation type after a threshold period has elapsed. For example, the idle state manager 118 periodically restarts each idle state calculation loop, which resets the loop to use the first idle residency calculation type (e.g., SMA). For example, the idle state manager 118 periodically restarts an idle state calculation loop when a threshold amount of time has elapsed (e.g., 25ms, 50ms, or 100ms) or a threshold number of idle periods have occurred (e.g., three idle periods, five idle periods, or ten idle periods).

Accordingly, the embodiments described herein project processor idle residency based on a multi-stage statistical method, allowing for energy savings while considering the negative effects (e.g., energy and performance) of selecting a deeper idle state. Using feedback loop 201, idle state manager 118 takes the tradeoff of losing opportunities to save more power to avoid potential energy inefficiency. Since idle state manager 118 resets the projection to SMA every idle evaluation period (e.g., when feedback loop 201 is restarted), this tradeoff only lasts for a short time in exchange for a more reliable selection temporarily. Using SMA and EMA projections, the idle state manager 118 balances inclusive and restrictive idle state selection. Notably, these embodiments operate without interrupt interception in a virtualized environment or relying on hardware-based auto-demotion. Additionally, because methods and systems are performed by the hypervisor, they are operable regardless of hardware (processor) support for auto-demotion.

Described herein is a method implemented in a computer system with a processor system, including a logical processor, includes configuring an idle state calculation loop with a first idle residency calculation type, generating a projected processor idle residency, determining a target processor idle state based on the projected residency, instructing the logical processor to enter an idle period using the target state, identifying the actual processor idle residency post-idle period, and comparing it to the projected residency. Based on this comparison, the method configures the idle state calculation loop with a second idle residency calculation type. This method optimizes processor idle states by dynamically adjusting the calculation type to improve power efficiency and performance in the computer system.

Alternatively or in addition to the other examples described herein, examples include any combination of the following:

Clause 1. A method, implemented in a computer system that includes a processor system comprising a logical processor, the method comprising: configuring an idle state calculation loop to use a first idle residency calculation type; generating a projected processor idle residency using the first idle residency calculation type; determining a target processor idle state based on the projected processor idle residency; instructing the logical processor to enter an idle period using the target processor idle state; identifying an actual processor idle residency for the idle period after the logical processor returns from the idle period; determining that the actual processor idle residency was less than the projected processor idle residency; and configuring the idle state calculation loop to use a second idle residency calculation type based on determining that the actual processor idle residency was greater than or less than the projected processor idle residency.

Clause 2. The method of clause 1, wherein the first idle residency calculation type is an SMA of prior processor idle residency for the logical processor.

Clause 3. The method of clause 2, wherein the SMA is calculated by averaging actual idle residency over N prior idle periods, where N is a positive integer.

Clause 4. The method of clause 1, wherein the second idle residency calculation type is an EMA of prior processor idle residency.

Clause 5. The method of clause 4, wherein the EMA is calculated as $(1 - \alpha) * X + \alpha * Y$, where X is a prior EMA calculation, Y is the actual processor idle residency, and $\alpha$ is a weighting factor.

Clause 6. The method of clause 5, wherein the method further comprises adjusting the weighting factor based on determining a difference between the actual processor idle residency and the projected processor idle residency.

Clause 7. The method of clause 1, wherein: the processor system comprises a plurality of logical processors, and the method comprises operating a different idle state calculation loop for each logical processor.

Clause 8. The method of clause 1, wherein the idle state calculation loop uses the second idle residency calculation type until the idle state calculation loop is reset.

Clause 9. The method of clause 8, wherein the method further comprises resetting the idle state calculation loop, including configuring the idle state calculation loop to use the first idle residency calculation type, after a threshold period has elapsed.

Clause 10. The method of clause 9, wherein the threshold period is an amount of time or a number of idle periods.

Clause 11. The method of clause 8, wherein the idle period is a first idle period and the actual processor idle residency, is a first actual processor idle residency, and wherein the method further comprises: generating a second projected processor idle residency using the first idle residency calculation type; determining a second target processor idle state based on the second projected processor idle residency; instructing the logical processor to enter a second idle period using the second target processor idle state; identifying a second actual processor idle residency for the idle period after the logical processor returns from the second idle period; determining that the second actual processor idle residency was greater than the second projected processor idle residency; and retaining the first idle residency calculation type based on determining that the second actual processor idle residency was greater than the second projected processor idle residency

Clause 12. A computer system, comprising: a processor system comprising a logical processor; and a computer storage medium that stores computer-executable instructions that are executable by the processor system to at least: configure an idle state calculation loop to use a first idle residency calculation type; generate a projected processor idle residency using an SMA of prior processor idle residency; determine a target processor idle state based on the projected processor idle residency; instruct the logical processor to enter an idle period using the target processor idle state; identify an actual processor idle residency for the idle period after the logical processor returns from the idle period; determine that the actual processor idle residency was less than the projected processor idle residency; and configure the idle state calculation loop to use an EMA of prior processor idle residency based on determining that the actual processor idle residency was less than the projected processor idle residency.

Clause 13. The computer system of clause 12, wherein the SMA is calculated by averaging actual idle residency over N prior idle periods, where N is a positive integer.

Clause 14. The computer system of clause 13, wherein the EMA is calculated as $(1 - \alpha) * X + \alpha * Y$, where X is a prior EMA calculation, Y is the actual processor idle residency, and $\alpha$ is a weighting factor.

Clause 15. The computer system of clause 12, wherein: the processor system comprises a plurality of logical processors, and the computer-executable instructions are executable to operate a different idle state calculation loop for each logical processor.

Clause 16. The computer system of clause 15, wherein the idle state calculation loop uses the EMA until the idle state calculation loop is reset.

Clause 17. The computer system of clause 16, wherein the computer-executable instructions are executable to reset the idle state calculation loop, including configuring the idle state calculation loop to use the first idle residency calculation type, after a threshold period has elapsed.

Clause 18. The computer system of clause 17, wherein the threshold period is an amount of time or a number of idle periods.

Clause 19. A computer storage medium that stores computer-executable instructions that are executable by a processor system that comprises a logical processor, the computer-executable instructions including instructions that are executable by the processor system to at least: configure an idle state calculation loop to use a first idle residency calculation type; generate a projected processor idle residency using an SMA of prior processor idle residency; determine a target processor idle state based on the projected processor idle residency; instruct the logical processor to enter an idle period using the target processor idle state; identify an actual processor idle residency for the idle period after the logical processor returns from the idle period; determine that the actual processor idle residency was less than the projected processor idle residency; configure the idle state calculation loop to use an EMA of prior processor idle residency based on determining that the actual processor idle residency was less than the projected processor idle residency; and after a threshold period has elapsed, reset the idle state calculation loop, including configuring the idle state calculation loop to use the first idle residency calculation type.

Clause 20. The computer storage medium of clause 19, wherein: the SMA is calculated by averaging actual idle residency over N prior idle periods, where N is a positive integer; and the EMA is calculated as $(1 - \alpha) * X + \alpha * Y$, where X is a prior EMA calculation, Y is the actual processor idle residency, and $\alpha$ is a weighting factor.

Embodiments of the disclosure comprise or utilize a special-purpose or general-purpose computer system (e.g., computer system 101) that includes computer hardware, such as, for example, a processor system (e.g., processor system 103) and system memory (e.g., memory 105), as discussed in greater detail below. Embodiments within the scope of the present disclosure also include physical and other computer-readable media for carrying or storing computer-executable instructions and/or data structures. Such computer-readable media can be any available media accessible by a general-purpose or special-purpose computer system. Computer-readable media that store computer-executable instructions and/or data structures are computer storage media (e.g., storage medium 106). Computer-readable media that carry computer-executable instructions and/or data structures are transmission media. Thus, embodiments of the disclosure can comprise at least two distinctly different kinds of computer-readable media: computer storage media and transmission media.

Computer storage media are physical storage media that store computer-executable instructions and/or data structures. Physical storage media include computer hardware, such as random access memory (RAM), read-only memory (ROM), electrically erasable programmable ROM (EEPROM), solid state drives (SSDs), flash memory, phase-change memory (PCM), optical disk storage, magnetic disk storage or other magnetic storage devices, or any other hardware storage device(s) which store program code in the form of computer-executable instructions or data structures, which can be accessed and executed by a general-purpose or special-purpose computer system to implement the disclosed functionality.

Transmission media include a network and/or data links that carry program code in the form of computer-executable instructions or data structures that are accessible by a general-purpose or special-purpose computer system. A "network" is defined as a data link that enables the transport of electronic data between computer systems and other electronic devices. When information is transferred or provided over a network or another communications connection (either hardwired, wireless, or a combination thereof) to a computer system, the computer system may view the connection as transmission media. The scope of computer-readable media includes combinations thereof.

Upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., network interface 107) and eventually transferred to computer system RAM and/or less volatile computer storage media at a computer system. Thus, computer storage media can be included in computer system components that also utilize transmission media.

Computer-executable instructions comprise, for example, instructions and data which when executed at a processor system, cause a general-purpose computer system, a special-purpose computer system, or a special-purpose processing device to perform a function or group of functions. In embodiments, computer-executable instructions comprise binaries, intermediate format instructions (e.g., assembly language), or source code. In embodiments, a processor system comprises one or more central processing units (CPUs), one or more graphics processing units (GPUs), one or more neural processing units (NPUs), and the like.

In some embodiments, the disclosed systems and methods are practiced in network computing environments with many types of computer system configurations, including personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, and the like. In some embodiments, the disclosed systems and methods are practiced in distributed system environments where different computer systems, which are linked through a network (e.g., by hardwired data links, wireless data links, or by a combination of hardwired and wireless data links), both perform tasks. As such, in a distributed system environment, a computer system may include a plurality of constituent computer systems. Program modules may be located in local and remote memory storage devices in a distributed system environment.

In some embodiments, the disclosed systems and methods are practiced in a cloud computing environment. In some embodiments, cloud computing environments are distributed, although this is not required. When distributed, cloud computing environments may be distributed internally within an organization and/or have components possessed across multiple organizations. In this description and the following claims, "cloud computing" is a model for enabling on-demand network access to a shared pool of configurable computing resources (e.g., networks, servers, storage, applications, and services). A cloud computing model can be composed of various characteristics, such as on-demand self-service, broad network access, resource pooling, rapid elasticity, measured service, and so forth. A cloud computing model may also come in the form of various service models such as Software as a Service (SaaS), Platform as a Service (PaaS), Infrastructure as a Service (IaaS), etc. The cloud computing model may also be deployed using different deployment models such as private cloud, community cloud, public cloud, hybrid cloud, etc.

Some embodiments, such as a cloud computing environment, comprise a system with one or more hosts capable of running one or more virtual machines (VMs). During operation, VMs emulate an operational computing system, supporting an operating system (OS) and perhaps one or more other applications. In some embodiments, each host includes a hypervisor that emulates virtual resources for the VMs using physical resources that are abstracted from the view of the VMs. The hypervisor also provides proper isolation between the VMs. Thus, from the perspective of any given VM, the hypervisor provides the illusion that the VM is interfacing with a physical resource, even though the VM only interfaces with the appearance (e.g., a virtual resource) of a physical resource. Examples of physical resources include processing capacity, memory, disk space, network bandwidth, media drives, and so forth.

Although the subject matter has been described in language specific to structural features and/or methodological acts, it is to be understood that the subject matter defined in the appended claims is not necessarily limited to the described features or acts described supra or the order of the acts described supra. Rather, the described features and acts are disclosed as example forms of implementing the claims.

The present disclosure may be embodied in other specific forms without departing from its essential characteristics. The described embodiments are only illustrative and not restrictive. All changes that come within the meaning and range of equivalency of the claims are to be embraced within their scope.

When introducing elements in the appended claims, the articles "a," "an," "the," and "said" are intended to mean there are one or more of the elements. The terms "comprising," "including," and "having" are intended to be inclusive and mean that there may be additional elements other than the listed elements. Unless otherwise specified, the terms "set," "superset," and "subset" are intended to exclude an empty set, and thus "set" is defined as a non-empty set, "superset" is defined as a non-empty superset, and "subset" is defined as a non-empty subset. Unless otherwise specified, the term "subset" excludes the entirety of its superset (i.e., the superset contains at least one item not included in the subset). Unless otherwise specified, a "superset" can include at least one additional element, and a "subset" can exclude at least one element.

**Claims**

1.  A method (600), implemented in a computer system (101) that includes a processor system (103) comprising a logical processor, the method comprising:

    configuring (601) an idle state calculation loop (201) to use a first idle residency calculation type (204);
    generating (602) a projected processor idle residency using the first idle residency calculation type;
    determining (603) a target processor idle state based on the projected processor idle residency;
    instructing (603) the logical processor to enter an idle period using the target processor idle state;
    identifying (604) an actual processor idle residency for the idle period after the logical processor returns from the idle period;
    determining (604) that the actual processor idle residency was less than the projected processor idle residency; and
    configuring (605) the idle state calculation loop to use a second idle residency calculation type (205) based on determining that the actual processor idle residency was less than the projected processor idle residency.

2.  The method of claim 1, wherein the first idle residency calculation type is a simple moving average (SMA) of prior processor idle residency for the logical processor.

3.  The method of claim 2, wherein the SMA is calculated by averaging actual idle residency over N prior idle periods, where N is a positive integer.

4.  The method of claim 1, wherein the second idle residency calculation type is an exponential moving average (EMA) of prior processor idle residency.

5.  The method of claim 4, wherein the EMA is calculated as $(1 - \alpha) * X + \alpha * Y$, where X is a prior EMA calculation, Y is the actual processor idle residency, and $\alpha$ is a weighting factor.

6.  The method of claim 5, wherein the method further comprises adjusting the weighting factor based on determining a difference between the actual processor idle residency and the projected processor idle residency.

7.  The method of any one of claim 1 to claim 6, wherein:

    the processor system comprises a plurality of logical processors, and
    the method comprises operating a different idle state calculation loop for each logical processor.

8.  The method of any one of claim 1 to claim 7, wherein the idle state calculation loop uses the second idle residency calculation type until the idle state calculation loop is reset.

9.  The method of claim 8, wherein the method further comprises resetting the idle state calculation loop, including configuring the idle state calculation loop to use the first idle residency calculation type, after a threshold period has elapsed.

10. The method of claim 9, wherein the threshold period is an amount of time or a number of idle periods.

11. The method of claim 9, wherein the idle period is a first idle period and the actual processor idle residency, is a first actual processor idle residency, and wherein the method further comprises:

    generating a second projected processor idle residency using the first idle residency calculation type;
    determining a second target processor idle state based on the second projected processor idle residency;
    instructing the logical processor to enter a second idle period using the second target processor idle state;
    identifying a second actual processor idle residency for the idle period after the logical processor returns from the second idle period;
    determining that the second actual processor idle residency was greater than the second projected processor idle residency; and
    retaining the first idle residency calculation type based on determining that the second actual processor idle residency was greater than the second projected processor idle residency.

12. A computer system, comprising:

    a processor system comprising a logical processor; and
    a computer storage medium that stores computer-executable instructions that are executable by the processor system to at least:

        configure an idle state calculation loop to use a first idle residency calculation type;
        generate a projected processor idle residency using a simple moving average (SMA) of prior processor idle residency;
        determine a target processor idle state based on the projected processor idle residency;
        instruct the logical processor to enter an idle period using the target processor idle state;
        identify an actual processor idle residency for the idle period after the logical processor returns from the idle period;
        determine that the actual processor idle residency was less than the projected processor idle residency; and
        configure the idle state calculation loop to use an exponential moving average (EMA) of prior processor idle residency based on determining that the actual processor idle residency was less than the projected processor idle residency.

13. The computer system of claim 12, wherein the SMA is calculated by averaging actual idle residency over N prior idle periods, where N is a positive integer.

**14.** The computer system of any one of claim 12 or claim 13, wherein the EMA is calculated as $(1 - \alpha) * X + \alpha * Y$, where X is a prior EMA calculation, Y is the actual processor idle residency, and $\alpha$ is a weighting factor.

**15.** The computer system of any one of claim 12 to claim 14, wherein:

the processor system comprises a plurality of logical processors, and
the computer-executable instructions are executable to operate a different idle state calculation loop for each logical processor.

**Computer System 101**

**Root Partition 110**

**Host OS 114**

Virtualization Stack 117

**Guest Partition 111a**

Guest OS 115a

**Guest Partition 111n**

Guest OS 115n

...

VM Bus 108

**Hypervisor 109** | Idle State Manager 118

**Hardware 102** | Processor System 103 | Idle States 104 | Memory 105 | Storage Medium 106 | Network Interface 107

*FIG. 1*

200

Idle State Manager 118

Feedback Loop 201

Initialization 202

Projection 203

SMA 204

EMA 205

Validation 206

Idle State 207

**FIG. 2**

300

```
                              ┌─────────────────────────┐
                              │  Idle Evaluation Start  301 │
                              └─────────────────────────┘
                                          │
                                          ▼
                              ┌─────────────────────────┐
                              │  Initialized With SMA   302 │
                              └─────────────────────────┘
                                          │
                                          ▼
  ┌──────────────────────────┐  ┌─────────────────────────┐
  │ EMA-Based Projection 309 │─▶│  Idle State Projection  303 │◀─
  └──────────────────────────┘  └─────────────────────────┘
                                          │
                                          ▼
                              ┌─────────────────────────┐
                              │   Selected Idle State   304 │
                              └─────────────────────────┘
                                          │
                                          ▼
                              ┌─────────────────────────┐
                              │       Exit Idle         305 │
                              └─────────────────────────┘
                                          │
                                          ▼
                                        ◇ 306 ◇
```

307
Inaccurate Projection
(Actual Residency Less
Than Breakeven)

308
Accurate Projection
(Actual Residency
Greater Than
Breakeven)

**FIG. 3**

FIG. 4

**FIG. 5**

EP 4 682 675 A1

600

Configure An Idle State Loop To
Use A First Idle Residency Calculation | 601

Generate A Projected Idle Residency | 602

Instruct A Processor To Enter An Idle State | 603

Determine If The Projected Idle Residency Was Accurate | 604

Configure The Idle State Loop To
Use A Second Idle Residency Calculation | 605

Reset The Idle State Loop | 606

*FIG. 6*

| | Europäisches Patentamt European Patent Office Office européen des brevets | **EUROPEAN SEARCH REPORT** | **Application Number** EP 25 18 7893 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/317757 A1 (RAO KARTHIK [US] ET AL) 6 October 2022 (2022-10-06) <br> * figures 1,2,3,4,5,6,7,8,10 * <br> * paragraph [0032] * <br> * paragraph [0043] - paragraph [0045] * <br> * paragraph [0049] - paragraph [0051] * <br> ----- | 1-15 | INV. <br> G06F1/3206 <br> G06F1/324 <br> G06F1/3287 <br> G06F1/3296 |

**TECHNICAL FIELDS SEARCHED (IPC)**

G06F

The present search report has been drawn up for all claims

| Place of search | Date of completion of the search | Examiner |
|---|---|---|
| The Hague | 24 November 2025 | Suzic, Bojan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 7893

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2025

| Patent document cited in search report | Publication date | Patent family member(s) | Publication date |
|---|---|---|---|
| US 2022317757 A1 | 06-10-2022 | CN 117377925 A | 09-01-2024 |
| | | EP 4314990 A1 | 07-02-2024 |
| | | JP 7745644 B2 | 29-09-2025 |
| | | JP 2024512468 A | 19-03-2024 |
| | | KR 20240004362 A | 11-01-2024 |
| | | US 2022317757 A1 | 06-10-2022 |
| | | US 2023088994 A1 | 23-03-2023 |
| | | WO 2022212385 A1 | 06-10-2022 |

EPO FORM P0459

For more details about this annex : see Official Journal of the European Patent Office, No. 12/82